# EUROPEAN PATENT APPLICATION

(11) **EP 1 657 824 A1**
(43) Date of publication of application: **17.05.2006**
(21) Application number: 04772272.3
(22) Date of filing: 20.08.2004
(51) Int. Cl.: H04B 1/16, H04Q 7/38, H04L 12/56

(54) **PACKET COMMUNICATION TERMINAL APPARATUS AND COMMUNICATION SYSTEM**

(30) Priority: 20.08.2003 JP 2003295963
(71) Applicant: MATSUSHITA ELECTRIC INDUSTRIAL CO., LTD., Kadoma-shi, Osaka 571-8501 (JP)
(72) Inventor: GOTO, Michiyo, Kanagawa 239-0841 (JP)
(74) Representative: Grünecker, Kinkeldey, Stockmair & Schwanhäusser Anwaltssozietät
(86) International application number: PCT/JP2004/012316
(87) International publication number: WO 2005/020450

(57) **Abstract**

A packet communication apparatus that allows the user of the communication terminal performing packet communication to take countermeasures when packet loss occurs, such as, moving to a more satisfactory communication environment is provided.

A mark M3 indicating packet loss are displayed on the display screen 119 of the apparatus in addition to marks M1 and M2 indicating the received power and the remaining amount of the battery, respectively.

The packet loss is notified to the user by changing the expression of a face of the mark M3 according to the extent of the packet loss.

That is, when the mark M3 has a smiling face, a state in which the packet loss is not occurring is indicated, when the mark M3 has a normal face, a state in which the packet loss has occurred but has substantially no practical problems as the packet is compensated is indicated, and when the mark M3 has a crying face, a state in which the packet loss has occurred and deteriorating of data is significant is indicated.

## Description

### Technical Field

The present invention relates to a packet communication terminal such as, a portable telephone, a mobile PC and the like for performing packet communication through a mobile communication network or a wireless LAN and a communication system.

### Background Art

Recently, audio streaming (streamingproductionand suchlike of audio data) using a personal computer is becoming possible to perform due to development in data communication technique. The audio streaming is, in the near future, thought to be performed in a communication terminal such as a portable telephone, a mobile PC and the like.

However, it is impossible to completely eliminate packet loss caused by deterioration of the communication environment in a protocol currently used in data communication. The packet loss is when, for example, the packet data are received damaged on the reception side and become unrecognizable data, or when the packet itself gets lost in the network and disappears. There is a communication system for performing re-transmission control of the packet data when the packet data are not received on the reception side without error, but in such system as well, if the packet did not arrive on the reception side within a predetermined time even after re-transmission is repeated, such packet data are generally discarded on the transmission side.

Therefore, a countermeasure that minimizes the damage experienced by the user of the communication terminal due to packet loss is necessary. To take a measure against such situation, the conventional packet communication terminal apparatus temporary stores the received packet data and, when packet loss occurs, interpolates the data from the packets before and after the lost packet to reproduce the packet data (refer e.g., Japanese Laid-Open Patent Publication No. 2000-59391 (Abstract, Fig. 1)).

However, the conventional apparatus automatically interpolates the packet data regardless of the will of the user of the communication terminal when packet loss occurs. Further, although the data contained in the lost packet is reproduced as a result, the degree of reproduction is not complete, and thus cannot always guarantee that the result will satisfy the user of the communication terminal.

### Disclosure of Invention

It is therefore an object of the present invention to provide a packet communication terminal apparatus and the like convenient for the users that allows the users of the communication terminal performing packet communication to take countermeasures such as moving to a more satisfactory communication environment when packet loss occurs, that allows the countermeasure (compensation method) for the lost packet to be determined based on the will of the user.

This aim is solved by a packet communication terminal apparatus and the like including a receiving means for receiving packet data, and a notifying means for notifying the user of the relevant fact, when packet loss occurs in the received packet data.

### Brief Description of Drawings

FIG. 1 is a block diagram showing a main configuration of a communication system including a packet communication terminal apparatus according to Embodiment 1;
Fig.2 is a view showing a more specific configuration of the packet communication terminal apparatus according to Embodiment 1;
Fig.3 is a block diagram showing a configuration of a variation of the packet communication terminal apparatus according to Embodiment 1;
Fig.4 is a block diagram showing a configuration of a variation of the packet communication terminal apparatus according to Embodiment 1;
Fig.5 is a block diagram showing a configuration of a variation of the packet communication terminal apparatus according to Embodiment 1;
Fig. 6 is a block diagram showing a main configuration of the internal part of a signal receiving section according to Embodiment 1; and
Fig. 7 is a block diagram showing a main configuration of the communication system including a packet communication terminal apparatus according to Embodiment 2.

### Best Mode for Carrying Out the Invention

Embodiments of the present invention will be described in detail below with reference to the accompanying drawings.

### (Embodiment 1)

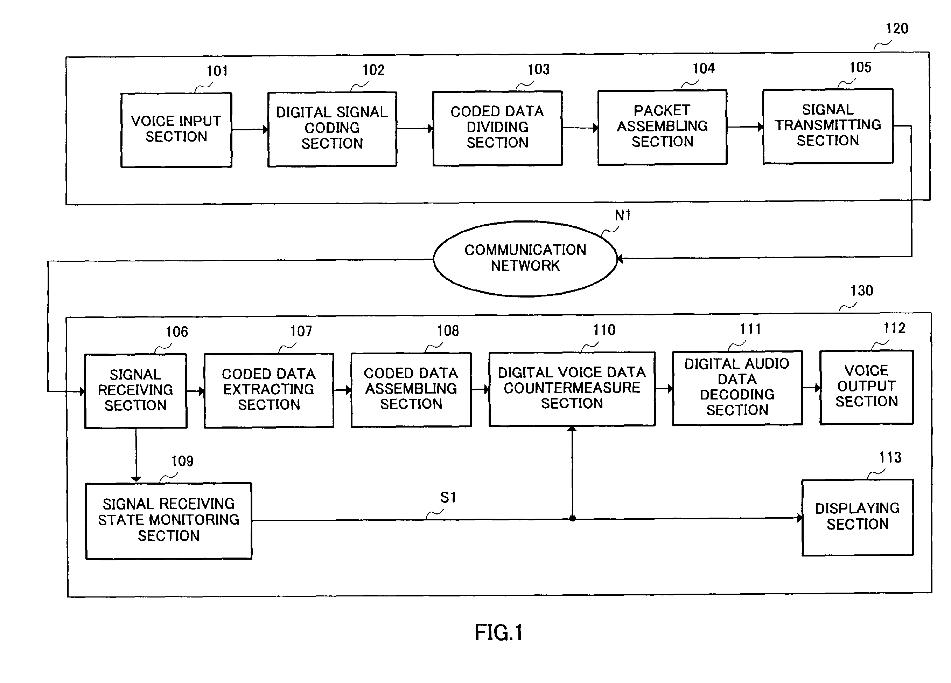

Fig. 1 is a block diagram showing a main configuration of a communication system including a packet communication terminal apparatus according to Embodiment 1 of the present invention. A case where the packet data is voice data (include audio signal) will now be explained by way of example.

The communication system includes packet communication terminal apparatuses 120, 130 and a communication network N1.

The operation of the packet communication terminal apparatus 120 is as described below.

The analog voice signal input to voice input section 101 is coded and converted to digital voice data in a digital signal coding section 102. The digital voice data is divided for every constant time t in a coded data dividing section 103, sequentially assembled as voice packet in a packet assembling section 104 and after a transmission voice packet number s is added, transmitted at high-speed from a signal transmitting section 105 on an asynchronous digital communication network or on the communication network N1.

The operation of the packet communication terminal apparatus 130 is as described below.

Asignalreceivingsection106sequentiallyreceives the voice packet transmitted from the communication network N1 . A coded data extracting section 107 extracts a voice data value based on the transmitted voice packet number s added to the voice packet each time the voice packet is received.A coded data assembling section 108 temporarily stores the voice data value extracted in the coded data extracting section 107 in an FIFO manner with the other voice data values that are already temporarily stored.

A signal receiving state monitoring section 109 regularly monitors the receiving state of the voice packet transmitted from the communication network N1 as a number of voice packets received within a predetermined time for every predetermined time in parallel with the above process of receiving the packet data. The monitoring result is notified to a digital voice data countermeasure section 110 and a displaying section 113 via a signal S1.

When it is revealed that the number of received voice packet is not reached a predetermined threshold value, and a missing number is found from the order of the packet number of the received voice packet, in particular, a specific voice packet is lost in the monitoring result of the packet receiving state notified from the signal receiving state monitoring section 109, the digital voice data countermeasure section 110 performs a compensation process on the specific lost packet.
Specifically, the digital voice data countermeasure section 110 replaces the voice data value included in the lost packet with the silent voice, or performs interpolation process on the lost voice data value from the packets before and after the lost packet already temporarily stored in the coded data assembling section 108, and reproduces the lost data. The reproduced data is inserted between the voice data values of before and after the lost packet temporarily stored in and output from the coded data assembling section 108 to maintain temporal continuity, and sequentially and periodically output to the digital audio data decoding section 111.

The digital audio data decoding section 111 decodes the compensated data and outputs the same to a voice output section 112. The voice output section 112 reproduces and outputs the decoded voice data.

The displaying section 113 displays a message, a symbol, a mark or an image indicating the occurrence of packet loss on a display screen at real time based on the monitoring result of the packet receiving state notified from the signal receiving state monitoring section 109, and rapidly and visually informs the user of the packet communication terminal apparatus 130 that packet loss has occurred. The message, symbol, or the image indicating the occurrence of packet loss is set in advance at the displaying section 113.

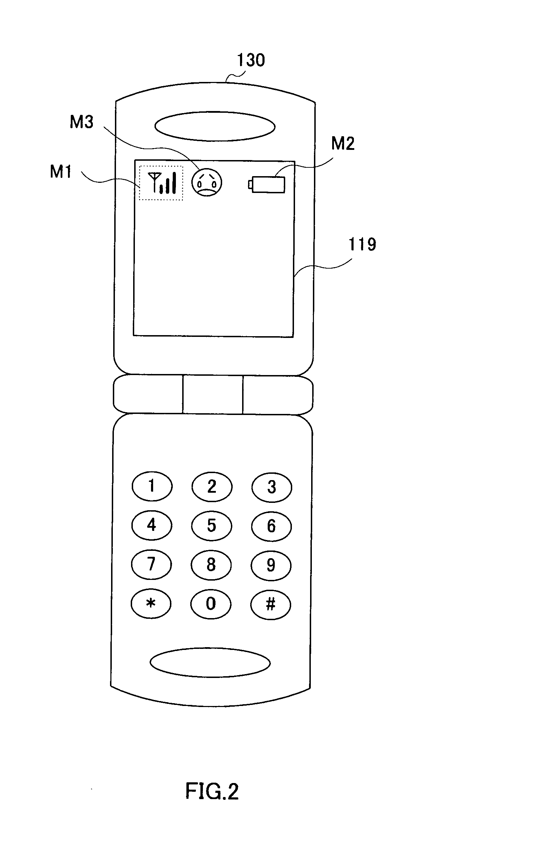

Fig.2 is a view showing a more specific configuration of the packet communication terminal apparatus 130. Here, a case where the packet communication terminal apparatus 130 is a portable telephone, and where the displaying section 113 displays information regarding packet loss using symbols are illustrated as an example.

In the figure, on the display screen 119 controlled by the displaying section 113, a mark M3 indicating packet loss are displayed in addition to a mark M1 indicating the strength of the receiving signal (received power) and a mark M2 indicating the remaining amount of the battery.

An example is provided that, by changing the expression of a face of the mark M3 according to the extent of packet loss (e.g., packet loss rate), the user is notified not only the presence of the packet loss but also a more detailed information regarding the packet loss. That is, when the mark M3 has a smiling face, a state in which the packet loss is not occurring is indicated, when the mark M3 has a normal face (stage face), a state in which the packet loss has occurred but has substantially no practical problems as the packet is compensated is indicated, and when the mark M3 has a crying face as in Fig. 2, a state in which the packet loss has occurred and degradation of data is significant is indicated.

Thus, by notifying the packet loss information using a mark similar to a mark (in the above example, marks M1 and M2) that a user is already familiar with, a comprehensible user interface is provided to the user without any resistance.

Further, by separately using the mark having a plurality of variations and displaying the extent of the packet loss, an intuitively comprehensible user interface is provided to the user irrespective of age or sex.

It is necessary for the packet communication terminal apparatus to actually receive the packet data, as described above in order to recognize that the packet communication terminal apparatus is under a communication environment where the packet loss may occur when receiving the packet data. Therefore, in the communication system to which the packet communication terminal apparatus belongs, test packet data (dummy data) for deciding the presence of the packet loss is transmitted to the packet communication terminal apparatus prior to the transmission of the packet data or the actual data. The test packet data is not charged. The packet communication terminal apparatus that receives the test packet data decides the packet loss through the reception result of the packet and notifies it to the user. Therefore, the user receives the test packet data beforehand and is able to recognize whether or not the current communication environment is an environment prone to packet loss in advance.

The significance of the packet communication terminal apparatus such as a portable telephone to notify the packet loss to the user will now be explained.

An IP (Internet Protocol) telephone that is recently being rapidly spread is based on the premise of the packet communication through the Internet.
Further, in a standard definition by 3GPP (3^{rd} Generation Partnership Project), one of a standard organization relating to the mobile wireless communication system, a packet communication method referred to as HSDPA (High Speed Downlink Packet Access) is proposed to perform communication at high-speed and in large volume in downlink. Therefore, the packet communication is considered to present an outline of the communication technique in the years ahead.

However, although a conventional communication terminal apparatus is provided a function for indicating the state of received power as an index for indicating the state of communication environment where the apparatus is situated, a function for displaying the packet loss information in the packet communication, specifically, the presence of the packet loss and the extent of the packet loss is not provided. Such packet loss information is an index that is more directly corresponded to the service quality of a service used by the user than the received power, and even if the received power is strong, there is no guarantee that the packet loss is not occurring. Thus, the demand of the user of the communication terminal apparatus to also check the packet loss information, which is an index more corresponded to the service quality, in addition to the received power information is thought to become more significant in the coming years.

For instance, when the user insisting on the sound quality of the music downloads the music data from a specific site on the Internet or listens to the music at real time through streaming, it must be unbearable for the user that the data is lost during communication or the sound quality is deteriorated. Further, when charged a great amount for listing to the music through downloading or streaming of data, the user may reconsider extending downloading or streaming if there is a possibility of the data being lost during communication.

Thus, by providing packet loss information to the user at real time, it is possible to the user to move to a location of better communication environment or may select another time for communication. That is, the present invention provides the user of a new index other than the received power as the index for deciding the communication environment that is more corresponded to indicate the service quality the user receives than the received power.

According to the present Embodiment, since the packet loss information is notified to the user through an easily recognized method, the user is able to take measures such as move to a better communication environment and the usability of the packet communication terminal apparatus is enhanced.

In the above explanation, the communication system of the Embodiment transmits a test dummy packet prior to the transmission of the actual data, but the packet loss may be decided in the reception of the actual data instead of transmitting. In such case, the user starts receiving the streaming data, but when the packet loss is notified from the communication terminal in the middle of reception, the user decides whether or not to continue receiving the streaming data and the like.

Further, in the above explanation, a case of visually notifying the user of the occurrence of the packet loss by displaying the fact on the user interface such as a display screen is explained, but the notifying method has variations explained below.

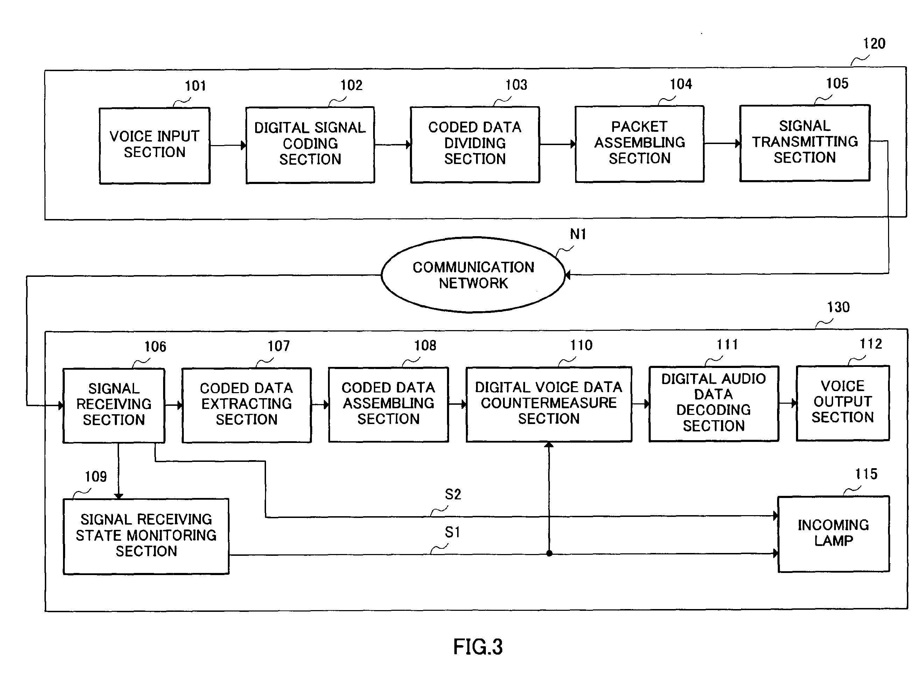

Fig. 3 is a block diagram showing a main configuration of the packet communication terminal apparatus when the packet loss is notified to the user through vision by using an incoming lamp as the user interface instead of the display screen. This packet communication terminal apparatus has a basic configuration similar to the packet communication terminal apparatus shown in Fig. 1, but differs in that the incoming lamp 115 is provided.

The incoming lamp 115 notifies the incoming of packet data through a signal S2 when the signal receiving section 106 receives the packet data. The usual function of the incoming lamp 115 is to flash the lamp on and off at a predetermined period and notify the user of the incoming of the packet data. In the present Embodiment, when the packet loss is detected in the signal receiving state monitoring section 109,the incoming lamp 115 further notifies such fact through a signal S1 . The incoming lamp 115 notifies the packet loss to the user by advancing the flash on/off period of the lamp from the flash on/off period of incoming of packet data.

Thus, by notifying the packet loss through flashing of the incoming lamp, the user is able to recognize such signal with a relatively low degree of attention. By changing the flashing on/off period of the lamp of when notifying the packet loss with the flashing on/off period of when the packet data is incoming, the user is able to distinguish and recognize the "incoming of packet data" and the "packet loss". In addition, by advancing the flashing on/off period of the lamp of when notifying the packet loss from the flashing on/off period of when the packet data is incoming, the user is able to intuitively recognize that such signal has a stronger meaning of warning.

Further, when the incoming lamp 115 has a function of notifying the user of the incoming of packet data by emitting a light of a specific color (e.g., yellow, blue, colorless etc.), the incoming lamp 115 is provided with a function for emitting a light of a different color (e.g., red as warning color) and notifies the user of the packet loss by emitting the light of such color. Thus, it is possible for the user to recognize the packet loss with a relatively low degree of attention and to distinguish and recognize the "incoming of packet data" and the "packet loss" by emitting a light of different color.

Further, if the incoming lamp 115 has a function of flashing the lamp in conjunction with a ringer melody, the packet loss may be notified to the user by randomly flashing the incoming lamp 115 irrespective of the ringer melody. Therefore, it is possible for the user to recognize the packet loss with a relatively low degree of attention and to distinguish and recognize the "incoming of packet data" and the "packet loss".

Fig. is a block diagram showing a main configuration of the packet communication terminal apparatus of when notifying the user of the packet loss through hearing using a speaker as the user interface.

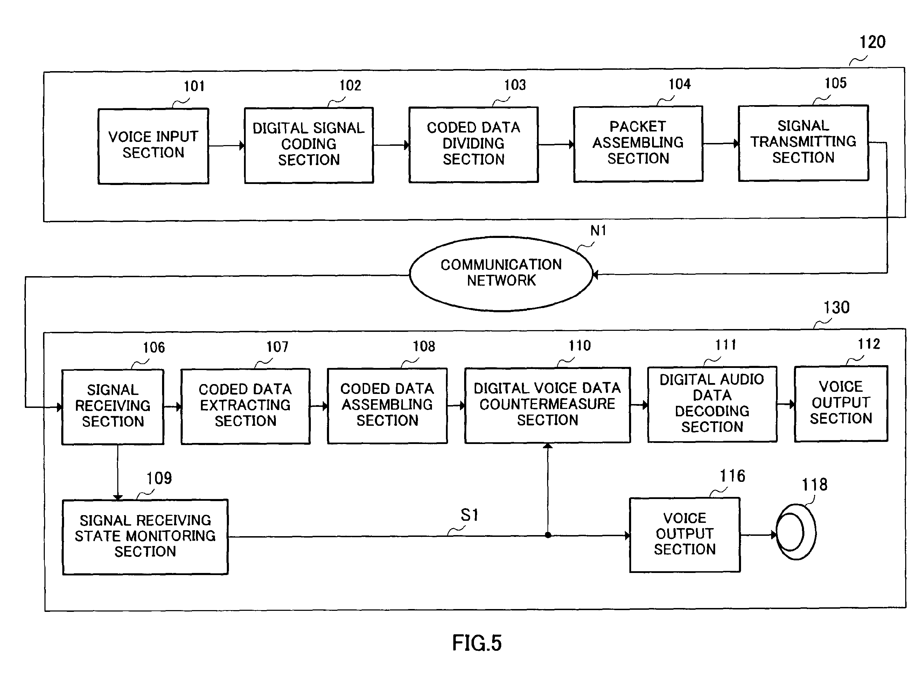

Fig. 5 is a block diagram showing a main configuration of the packet communication terminal apparatus when the packet loss is notified to the user through hearing using an ear phone. These packet communication terminal apparatuses have a basic configuration similar to the packet communication terminal apparatus shown in Fig. 1 but differ in that a voice output section 116, a speaker 117, and an ear phone 118 are provided.

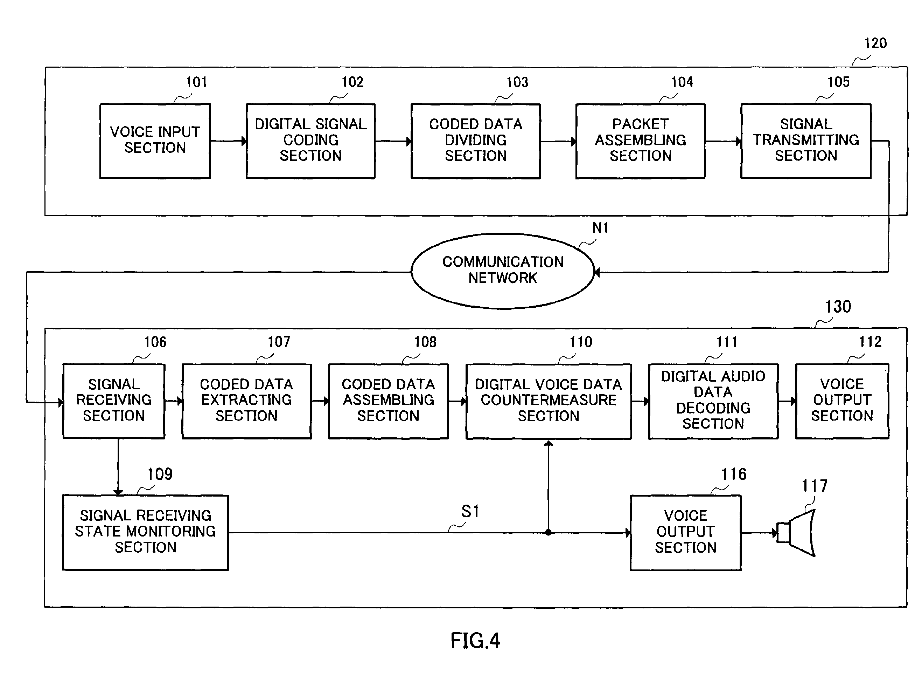

The voice output section 116 is notified of the packet loss through the signal S1 and outputs such fact from the speaker (Fig.4) or the ear phone 118 (Fig.5) through a predefined sound (voice message, signal sound, music signal etc.) and notifies the packet loss to the user through hearing.

Thus, the user is able to easily know the packet loss without paying any particular attention.

The packet loss may be notified to the user through sense of touch with a vibrator function of the packet communication terminal apparatus (not shown).

In the above explanation, a case where the service received by the user is one specific service such as music listening is explained as an example, but the present invention is also applicable when the user simultaneously receives a plurality of different services. For instance, the present invention is applicable in the following manner when simultaneously receiving the service of searching information on the Internet and the service of listing to music through streaming.

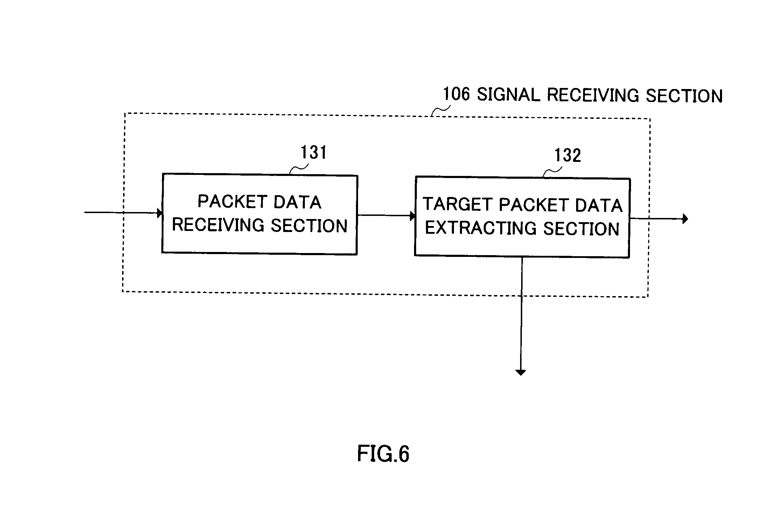

Fig. 6 is a block diagram showing a main configuration of an inner part of the signal receiving section 106 of the packet communication terminal apparatus 130.

In the figure, the packet data receiving section 131 receives data (packet data) in units of packet from the transmission side via the communication network N1 and performs a predetermined receiving process such as demodulation.

The target packet data extracting section 132 refers to the information of the head part of the packet data output from the packet data receiving section 131, decides which one of the service of a plurality of services the packet data belongs to, and determines whether or not such service is the service of the displayed object of the packet loss information. The target packet data extracting section 132 outputs only the packet determined as the music service and determined as the service of the displayed object of the packet loss information to the coded data extracting section 107 and the signal receiving state monitoring section 109, and outputs the packets that do not fulfill the above conditions to the decoding section (not shown) corresponding to the subsequent packets.

With such configuration, when two services of the information search on the Internet and streaming reproduction is used simultaneously and the displayed object of the packet loss information is set as the streaming service, the target packet data extracting section 132 extracts only the packet of streaming service from the received packet, and the signal receiving state monitoring section 109 monitors the loss of only the packet of streaming service and outputs the packet loss information to the displaying section 113 and the like. Thus, the user is able to obtain the packet loss information not on the service in which the packet loss of information search etc. of the Internet is not relatively relevant, but on the packet loss information on the streaming service in which the packet loss becomes important regarding the problem of sound quality and the like.

In the above example, a case where there is one service of the displayed object of the packet loss information is given by way of an example, but the present invention may monitor the packet loss individually for each of a plurality of services and display the packet loss information for each service by using different symbols and the like.

### (Embodiment 2)

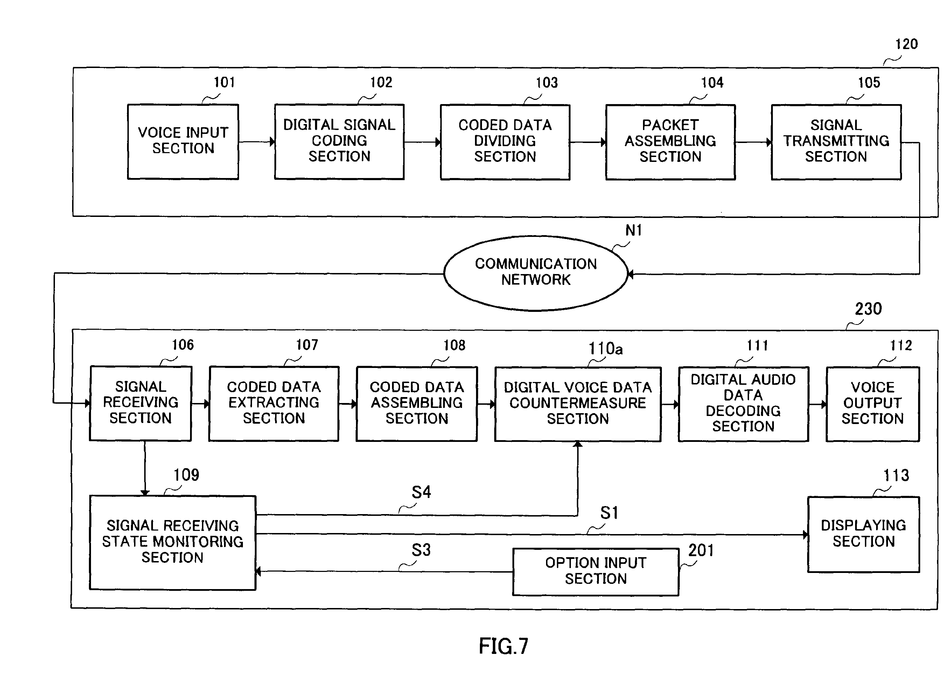

Fig. 7 is a block diagram showing a main configuration of a communication system including the packet communication terminal apparatus according to Embodiment 2 of the present invention. A case where the packet data is voice data will be explained by way of an example. The communication system has a basic configuration similar to the communication system shown in Fig. 1, and thus the same reference characters are denoted for the same components, and the explanation thereof is omitted.

The feature of the present Embodiment is that the packet communication terminal apparatus 230 includes an option input section 201. The characteristic operation different from Embodiment 1 of the packet communication terminal apparatus 230 will now be explained.

When the packet loss information is displayed on the displaying section 113, the user of the packet communication terminal apparatus 230 specifies one of the methods for handling the packet loss (compensation method of the lost packet) from the options set in advance and inputs the same using the option input section 201. The option input section 201 transmits the specified compensation method to the digital voice data countermeasure section 110a by way of the signal S3, the signal receiving state monitoring section 109, and the signal S4. The digital voice data countermeasure section 110a performs compensation of the lost packet using the specified compensation method.

The compensation methods set in advance in the digital voice data countermeasure section 110 includes the following. A case where two methods are set will be explained by way of example.

In the first method, the digital voice data countermeasure section 110a mutes the audio signal in streaming reproduction. That is, the digital voice data countermeasure section 110a replaces the voice data value contained in the lost packet with silent voice and then outputs it.

In the second method, the digital voice data countermeasure section 110a interpolates the audio signal in streaming reproduction based on the packets of before and after. That is, the digital voice data countermeasure section 110a interpolates the voice data value contained in the lost packet using the voice data value of before and after the lost packet that are already temporarily stored in the coded data assembling section 108 and then outputs it.

Therefore, according to the present embodiment, the user himself is able to select the compensation method of the lost packet and thus the usability of the packet communication terminal apparatus can be enhanced.

Each embodiment of the present invention are explained in detail.

In each embodiment, a configuration in which the transmission side codes the input signal at real time as shown in the packet communication terminal apparatus 120 and transmits the same as the packet data by way of the communication network N1 to the packet communication terminal apparatus 130 on the reception side is explained, but a configuration may be applied in which the transmission side 120 performs coding in advance and accumulates the same as the packet data in the memory, the media and the like, and transmits the accumulated packet data when requested from the packet communication terminal apparatus 130 on the reception side.

In each embodiment, a case where the packet data to be communicated is voice data is explained by way of an example, but the data may be other data, for example, character data such as e-mail, or moving image data such as video.

Further, in each embodiment, a case where the present invention is configured with hardware is explained by way of an example, but may be realized with software.

As described, according to the present invention, it is possible, when packet loss occurs, to notify the user of the packet communication terminal apparatus of such fact with an easy method, enable the user to take countermeasures such as moving to a better communication environment and determine the countermeasure (compensation method) on the lost packet based on the will of the user, and enhance the usability of the user.

The present specification is based on Japanese Patent Application No. 2003-295963 filed on August 20, 2003, the entire contents of which are hereby incorporated by reference.

### Industrial Applicability

The packet communication terminal apparatus according to the present invention has an advantage of providing a new index related to the communication environment to the user and is suitable for use in portable telephone, mobile PC and the like that performs packet communication through mobile communication network or wireless LAN.
FIG.1
   101 voice input section
   102 digital signal coding section
   103 coded data dividing section
   104 packet assembling section
   105 signal transmitting section
   106 signal receiving section
   107 coded data extracting section
   108 coded data assembling section
   109 signal receiving state monitoring section
   110 digital voice data countermeasure section
   111 digital audio data decoding section
   112 voice output section
   113 displaying section
   N1 communication network
FIG.3
   101 voice input section
   102 digital signal coding section
   103 coded data dividing section
   104 packet assembling section
   105 signal transmitting section
   106 signal receiving section
   107 coded data extracting section
   108 coded data assembling section
   109 signal receiving state monitoring section
   110 digital voice data countermeasure section
   111 digital audio voice decoding section
   112 voice output section
   115 incoming lamp
   N1 communication network
FIG.4
   101 voice input section
   102 digital signal coding section
   103 coded data dividing section
   104 packet assembling section
   105 signal transmitting section
   106 signal receiving section
   107 coded data extracting section
   108 coded data assembling section
   109 signal receiving state monitoring section
   110 digital voice data countermeasure section
   111 digital audio voice decoding section
   112 voice output section
   116 voice output section
   N1 communication network
FIG.5
   101 voice input section
   102 digital signal coding section
   103 coded data dividing section
   104 packet assembling section
   105 signal transmitting section
   106 signal receiving section
   107 coded data extracting section
   108 coded data assembling section
   109 signal receiving state monitoring section
   110 digital voice data countermeasure section
   111 digital audio data decoding section
   112 voice output section
   116 voice output section
   N1 communication network
FIG.6
   106 signal receiving section
   131 packet data receiving section
   132 target packet data extracting section
FIG.7
   101 voice input section
   102 digital signal coding section
   103 coded data dividing section
   104 packet assembling section
   105 signal transmitting section
   106 signal receiving section
   107 coded data extracting section
   108 coded data assembling section
   109 signal receiving state monitoring section
   110a digital voice data countermeasure section
   111 digital audio data decoding section
   112 voice output section
   113 displaying section
   201 option input section
   N1 communication network

## Claims

1. A packet communication terminal 1 apparatus comprising:
a receiving section that receives packet data; and
a notifying section that notifies , when packet loss occurs in a received packet data, information related to the packet loss through an user interface at real time.

2. The packet communication terminal apparatus according to claim 1, wherein the notifying section notifies the information related to the packet loss in conjunction with a real time display of received power.

3. The packet communication terminal apparatus according to claim 2 further comprising:
an extracting section that extracts packet data belonging to a specific service from the received packet; wherein
the notifying section notifies, when packet loss occurs in the packet data received by the receiving section and extracted by the extracting section, the information related to the packet loss.

4. The packet communication terminal apparatus according to claim 2, wherein the notifying section displays the information related to the packet loss using a message, a symbol, a mark, or an image on the same screen as the screen for displaying the received power.

5. The packet communication terminal apparatus according to claim 4, wherein the mark has a plurality of variations; and
the notifying section notifies the extent of the packet loss through the plurality of variations of the mark.

6. The packet communication terminal apparatus according to claim 2 further comprising:
a compensation section that compensates the lost packet data with one of the compensation methods of a plurality of compensation methods determined in advance; and
a selecting section that selects one of the compensation method out of the plurality of compensation methods as a response to the notification of the information related to the packet loss from the notifying section.

7. The packet communication terminal apparatus according to claim 6, wherein one of the compensation methods of the plurality of compensation methods is a compensation method for replacing an audio signal in streaming reproduction with a silent signal.

8. The packet communication terminal apparatus according to claim 2 further comprising:
an incoming lamp that notifies an incoming of the packet data by flashing a lamp at a predetermined period; wherein
the notifying section notifies the packet loss by advancing the flashing period of the incoming lamp from the predetermined period.

9. The packet communication terminal apparatus according to claim 2 further comprising:
a lamp that emits a light of a plurality of colors; wherein
the notifying section notifies the incoming of the packet data by emitting the lamp with the light of a specific color out of the plurality of colors, and notifies the packet loss by emitting the lamp with a light of a color other than the specific color.

10. The packet communication terminal apparatus according to claim 2, wherein the notifying section notifies the packet loss by outputting a predetermined sound from a speaker or an ear phone.

11. A communication system comprising:
the packet communication terminal apparatus according to claim 2; and
a base station that transmits test packet data that is not charged to the packet communication terminal apparatus.

12. A method of communicating packet comprising the steps of:
receiving packet data; and
notifying, when packet loss occurs in the received packet data, information related to the packet loss through an user interface at real time.
